**Europäisches Patentamt**

**European Patent Office**

**Office européen des brevets**

(11) Numéro de publication : **0 202 959**
**B1**

## (12) FASCICULE DE BREVET EUROPÉEN

(45) Date de publication du fascicule du brevet :
**30.11.88**

(21) Numéro de dépôt : **86400516.0**

(22) Date de dépôt : **11.03.86**

(51) Int. Cl.⁴ : **B 62 D   1/18**

(54) Dispositif de réglage d'une colonne de direction d'un véhicule automobile pourvu de moyens de blocage à genouillère.

(30) Priorité : **25.03.85 FR 8504426**

(43) Date de publication de la demande :
**26.11.86 Bulletin 86/48.**

(45) Mention de la délivrance du brevet :
**30.11.88 Bulletin 88/48**

(84) Etats contractants désignés :
**DE GB IT NL SE**

(56) Documents cités :
**DE-C-  902 586**
**FR-A- 1 581 191**
**FR-A- 2 360 454**
**GB-A- 2 033 855**
**GB-A- 2 113 629**

(73) Titulaire : **NACAM Société dite:**
**Route de Blois**
**F-41100 Vendome (FR)**

(72) Inventeur : **Haldric, Bernard**
**15rue Charles Lindberg**
**F-41100 Vendome (FR)**
Inventeur : **Benedi, Grégorio**
**1 rue Maréchal Rochambeau**
**F-41100 Vendome (FR)**
Inventeur : **Pretot, Daniel**
**2 rue Henri Dunant**
**F-41100 Vendome (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

La présente invention est relative aux dispositifs de réglage de colonnes de direction pour véhicules automobiles et se rapporte plus particulièrement à un dispositif de réglage pour colonne de direction réglable en hauteur, du type de celui défini dans le préambule de la revendication 1 et connu par exemple par le document FR-A-2 360 454.

Certains véhicules automobiles sont munis déjà depuis plusieurs années, de dispositifs de réglage de la position du volant destinés à adapter la position du volant à la taille du conducteur du véhicule.

Le blocage de ces dispositifs est assuré de deux façons.

Il existe des moyens de blocage du type à vis-écrou qui sont peu onéreux mais d'utilisation peu pratique car le blocage dépend de la force avec laquelle l'écrou est serré par l'utilisateur.

On utilise également des systèmes à came ou excentrique (cf. FR-A-2 360 454) qui sont eux aussi d'un prix de revient relativement faible mais qui sont la source d'efforts de frottement, ce qui nécessite d'exercer des efforts relativement importants sur le levier de commande du système.

L'invention vise à remédier aux inconvénients des dispositifs connus énoncés ci-dessus en créant un dispositif de réglage pour colonne de direction dont les moyens de blocage en position allient une relative simplicité de construction à un maniement à la fois précis et aisé.

Cet objectif est atteint notamment grâce aux mesures définies dans la partie caractérisante de la revendication 1.

L'invention sera mieux comprise à l'aide de la description qui va suivre, donnée uniquement à titre d'exemple et faite en se référant aux dessins annexés, sur lesquels :

- la Fig. 1 est une vue en élévation d'un dispositif de réglage d'une colonne de direction suivant l'invention ;

- la Fig. 2 est une coupe suivant la ligne 2-2 de la Fig. 1 ;

- la Fig. 3 est une coupe suivant la ligne 3-3 de la Fig. 2, montrant les moyens de blocage du dispositif de réglage suivant l'invention en position bloquée ;

- la Fig. 4 est une coupe partielle suivant la ligne 4-4 de la Fig. 2 montrant les moyens de blocage du dispositif en position débloquée ;

- la Fig. 5 est une vue en coupe d'un autre mode de réalisation des moyens de blocage du dispositif de réglage suivant l'invention en position débloquée ;

- la Fig. 6 est une coupe analogue à celle de la Fig. 5 montrant les moyens de blocage dans une position intermédiaire entre la position débloquée et la position bloquée ;

- la Fig. 7 est une coupe analogue à celle des Fig. 5 et 6 montrant les moyens de blocage en position bloquée ;

- la Fig. 8 est une vue partielle de côté représentant le levier d'actionnement des moyens de blocage des Fig. 5 à 7 : et

- la Fig. 9 est une vue en coupe d'un troisième mode de réalisation du dispositif de réglage suivant l'invention,

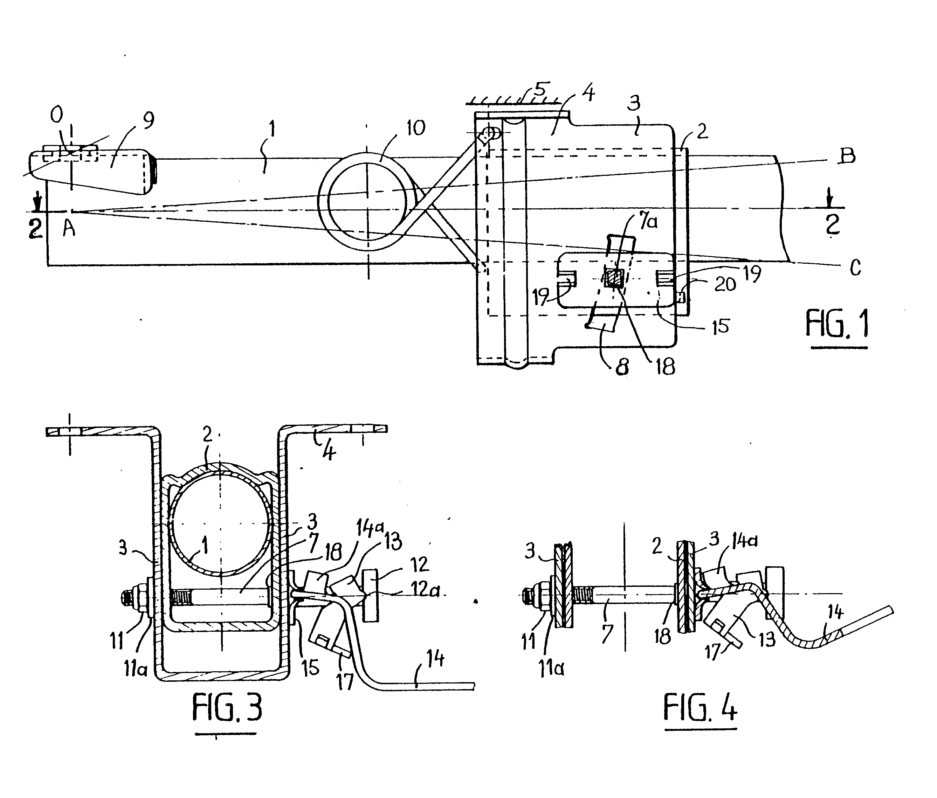

Le dispositif de réglage pour colonne de direction représenté aux Fig. 1 à 3 est un dispositif destiné à assurer uniquement un réglage vertical de la colonne de direction.

Ce dispositif comporte principalement un tube support de colonne 1 rendu solidaire d'un boîtier tubulaire 2 de section rectangulaire, par exemple par soudure. Le tube 1 est déplaçable dans un plan vertical entre deux ailes 3 d'une ferrure 4 rendue solidaire de la coque 5 d'un véhicule.

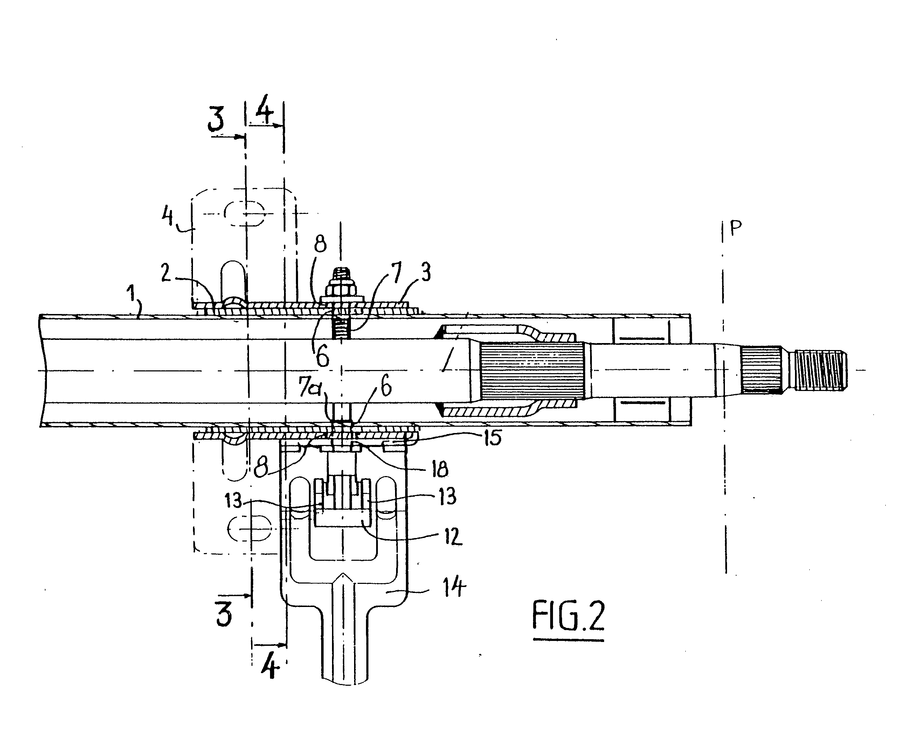

Le boîtier 2 comporte dans ses parois latérales deux trous 6 destinés à permettre le passage d'un axe 7 (Fig. 2). Les ailes 3 de la ferrure 4 comportent chacune une lumière incurvée 8. Les lumières 8 des ailes 3 sont également traversées par l'axe 7 et sont destinées à permettre le déplacement angulaire de l'ensemble tube support de colonne 1 — boîtier 2 autour du centre d'une rotule 9 solidaire de la caisse du véhicule.

Comme le montre la Fig. 1, le tube support de colonne 1 peut être déplacé dans un plan vertical suivant un angle délimité par les demi-droites en trait mixte AB, AC formant un angle dont l'axe du tube 1 constitue la bissectrice.

Ces limites sont définies par des limites de déplacement de l'axe 7 dans les lumières 8 de la ferrure 4.

Un ressort 10 dont les extrémités sont rendues solidaires respectivement du tube support de colonne 1 et de la ferrure 4, est destiné à assurer la compensation du poids de l'ensemble de façon à permettre de le maintenir dans une position moyenne lors de la libération du mécanisme de blocage.

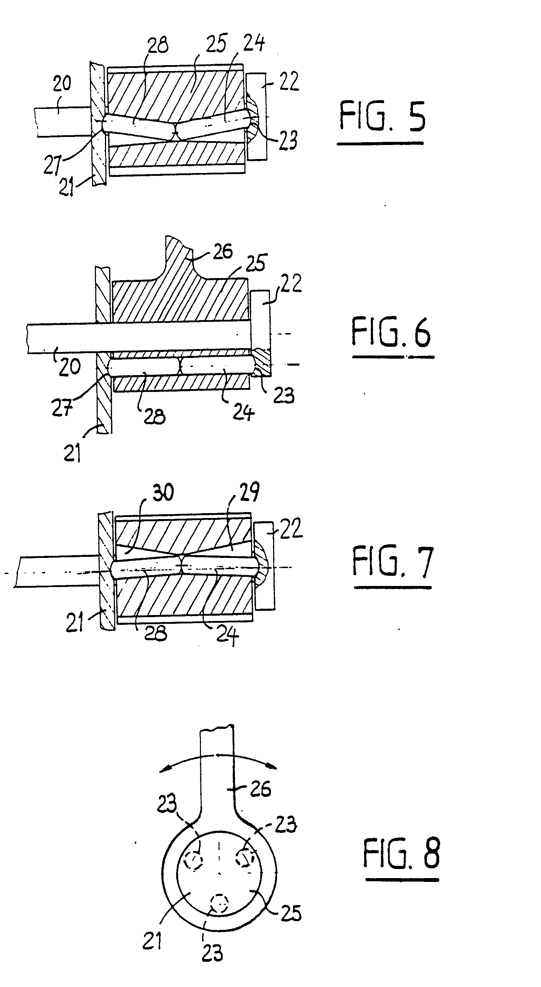

Ainsi qu'on le voit mieux sur la Fig. 3, l'axe 7 est constitué par une vis dont l'extrémité filetée porte un écrou 11 en appui sur l'une des ailes 3 de la ferrure 4 par l'intermédiaire d'une rondelle élastique 11a dont le rôle sera indiqué par la suite.

La vis 7 comporte une tête 12 sur la surface intérieure de laquelle prend appui un cliquet 13 en forme de U. Avec le cliquet 13 coopère un levier coudé 14 d'actionnement qui s'appuie par une de ses extrémités sur une plaque 15 appliquée contre l'aile 3 correspondante de la ferrure 4.

Ainsi que le montre la Fig. 3, le boîtier 2 est donc serré entre les ailes 3 de la ferrure 4 par l'intermédiaire de l'ensemble constitué par l'écrou 11, la vis 7, le levier 14 et le cliquet 13, ces deux derniers éléments constituant une genouillère. Sur la Fig. 3, le dispositif est représenté en position bloquée. Dans cette position, la partie du levier 14 située entre la plaque 15 et le cliquet 13 d'une part et la partie du cliquet 13 située entre le levier 14 et la tête de la vis 12 sur laquelle elle prend appui dans des évidements 12a ménagés dans celle-ci d'autre part exercent, dans la position représentée qui se trouve au-delà du franchissement du point mort, une traction sur la tige 7 et assurent de ce fait le serrage du boîtier 2 entre les ailes 3 de la ferrure 4.

Sur la Fig. 4, le dispositif est représenté en position débloquée. En effet, l'ensemble constitué par le levier 14 et le cliquet 13 se trouve dans une position en-deçà du franchissement du point mort, ce qui assure la libération de la vis 7 en translation. Le levier 14 est maintenu dans cette position par une patte 14a venue de pliage qui est en butée contre la plaque 15. La rondelle élastique 11a permet, lorsque le mécanisme est débloqué de maintenir l'ensemble sous une faible charge de manière à éviter des bruits pendant le réglage de la colonne.

Le cliquet 13 comporte une patte 17 formée butée pour le levier 14 lorsque celui-ci se trouve dans la position de blocage représentée à la Fig. 3.

Le système à genouillère qui vient d'être décrit permet d'assurer un effort de serrage suffisant tout en ayant à exercer un faible effort sur le levier de commande 14. La plaque 15 d'appui du levier 14 permet d'obtenir une surface d'appui suffisante sur l'aile 3 correspondante, les efforts étant transmis par la tranche du levier 14 en appui dans la plaque. La vis 7 possède une partie 7a de section carrée qui coopère avec l'un des trous carrés 6 du boîtier 1, de manière à éviter la rotation de la vis T. Afin de permettre le passage de la vis 7, la plaque 15 comporte elle aussi un orifice 18 de section carrée, superposé à l'orifice 6 correspondant de la plaque 2.

Ainsi qu'on peut le voir à la Fig. 1, la plaque 15 est de section rectangulaire et comporte sur ces deux petits côtés, des fentes 19 destinées à recevoir des languettes d'extrémité correspondantes du levier 14. En outre, la plaque 15 est immobilisée en rotation par rapport à l'aile 3 de la ferrure 4 par une patte latérale 20.

Sur les Fig. 5 à 8, on a représenté un autre mode de réalisation de dispositif de blocage appliqué au dispositif de réglage suivant l'invention.

Ce dispositif de blocage comporte comme le dispositif précédent, une vis 20 qui traverse comme dans l'exemple précédent un boîtier non représenté solidaire de la colonne de direction, les ailes d'une ferrure fixées à la coque du véhicule ainsi qu'une plaque 21 correspondant à la plaque 15 du mode de réalisation des Fig. 1 à 4. Dans la tête 22 de la vis 20 sont ménagés trois alvéoles 23 disposés à 120° dans lesquels prennent appui des aiguilles 24 disposées dans le corps cylindrique 25 d'un levier de commande 26 traversé par la vis 20.

La plaque 21 comporte elle aussi des alvéoles 27 disposés à 120° dans lesquels sont engagées les extrémités d'aiguilles 28 qui coopèrent avec les aiguilles 24 pour former avec celles-ci des genouillères correspondantes.

Les aiguilles 24 et 28 sont disposées dans des logements tronconiques 29, 30 destinés à permettre le déplacement angulaire relatif des aiguilles pendant la rotation du levier 26.

On voit sur la Fig. 5 que le dispositif de blocage se trouve dans sa position débloquée.

A la Fig. 6, le dispositif de blocage est dans une position instable de franchissement de point mort.

A la Fig. 7, le dispositif se trouve en position de blocage stable après franchissement du point mort de la Fig. 6.

La fonction assurée par le dispositif des Fig. 5 à 8 est équivalente à celle assurée par celui représenté aux Fig. 1 à 4, car les paires d'aiguilles 24, 28 assurent dans la position de blocage représentée à la Fig. 7, par appui des aiguilles respectivement sur la plaque 21 et sur la tête 22, une traction sur ladite vis et de ce fait, le serrage des ailes de la ferrure de maintien de la colonne sur le boîtier solidaire de celle-ci.

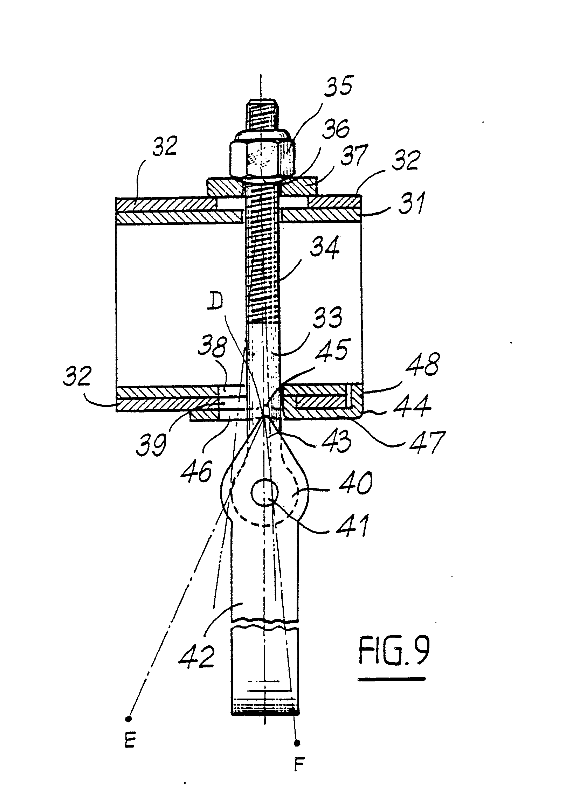

Le dispositif de réglage de colonne de direction représenté à la Fig. 9 comporte comme les modes de réalisation précédents, un boîtier 31 solidaire du tube de colonne non représenté, monté déplaçable entre les ailes 32 d'une ferrure fixée à la caisse du véhicule.

Le blocage du boîtier 31 et par conséquent de la colonne dans une position choisie est assuré par un dispositif de blocage à genouillère comprenant une tige 33 traversant le boîtier 31 et les ailes 32 de la ferrure et pourvue à une de ses extrémités d'une partie filetée 34 sur laquelle est monté un écrou 35 ayant une surface de portée sphérique 36 qui coopère avec une rondelle 37 qui prend appui sur l'aile 32 correspondante de la ferrure.

La tige 33 traverse le boîtier 31 par des lumières 38 destinées à permettre un déplacement angulaire de la tige.

Elle traverse les ailes 32 de la ferrure par des lumières 39 destinées elles aussi à permettre un déplacement angulaire.

Ces lumières présentent en outre une forme propre à assurer les déplacements angulaires de la colonne de direction de la manière décrite en référence aux modes de réalisation précédents.

A son extrémité opposée à l'écrou 35, la tige 33 comporte une tête pourvue d'un œillet 40 dans lequel est engagé un axe 41 d'articulation d'une chape 42 formant levier de manœuvre. Les pointes 43 de la chape 42 prennent appui contre une plaque 44 appliquée contre l'aile 32 correspondante de la ferrure et pourvue de creux 45 d'appui pour lesdites pointes 43.

La plaque 44 comporte elle aussi une lumière 46 de forme identique à celle des lumières 39 des ailes 32 de la ferrure.

Elle est immobilisée par rapport à l'aile 32 correspondante, par des pattes rabattues 47, 48.

Sur la Fig. 9, le dispositif à genouillère formé par la tige 33 et la chape 42 est représenté en position de point mort instable.

Les axes en trait mixte DE et DF représentent respectivement les positions de la genouillère en position de blocage et de déblocage du dispositif de réglage.

Lors du pivotement de la chape 42 autour de ses points d'appui 43, il y a déplacement angulaire de la tige 33 grâce à la présence de l'appui sphérique 36 de l'écrou 35.

Les positions de blocage et de déblocage sont déterminées par la venue de la tige 33 en butée contre les bords 46a et 46b de la lumière 46 de la plaque 44.

**Revendications**

1. Dispositif de réglage de la position d'une colonne de direction d'un véhicule automobile comportant un tube (1) support de colonne solidaire d'un boîtier (2 ; 31) de section rectangulaire et monté déplaçable angulairement à l'aide d'une articulation (9) fixée à la caisse du véhicule, entre les ailes (3 ; 32) d'une ferrure fixe (4) et comprenant une tige (7 ; 20, 33) qui traverse ce boîtier et est engagée dans des lumières (8 ; 39) ménagées dans les ailes (3 ; 32) de la ferrure et qui est pourvue à une extrémité de moyens (11, 11a ; 35, 37) de butée contre l'une des ailes (3 ; 32) de la ferrure, dispositif caractérisé en ce qu'il comprend des moyens de blocage à genouillère dont fait partie cette tige (7 ; 20 ; 33) et en ce que cette dernière est pourvue à son extrémité opposée d'une tête (12 ; 22 ; 40) entre laquelle et l'autre de ces ailes (3) de la ferrure (4) est interposé au moins un élément (13, 14 ; 24, 25 ; 42) de la genouillère pourvu d'un levier de commande (14 ; 26).

2. Dispositif de réglage suivant la revendication 1, caractérisé en ce qu'entre la tête de la tige (7) et ladite autre aile (3) de la ferrure, sont interposés deux éléments de la grenouillère, constitués par le levier de commande (14) dont une extrémité prend appui contre l'aile (3) correspondante de ladite ferrure (4) par l'intermédiaire d'une plaque (15) et qui coopère avec un cliquet (13) de section en U dont les ailes sont engagées dans leurs extrémités dans des évidements (12a) de la tête (12) de la tige (7).

3. Dispositif de réglage suivant la revendication 2, caractérisé en ce que ledit cliquet (13) comporte une patte (17) formant butée pour le levier (14) en position de blocage du dispositif.

4. Dispositif de réglage suivant l'une des revendications 2 et 3, caractérisé en ce que ledit levier (14) comporte une patte (14a) de butée en position de déblocage du dispositif.

5. Dispositif de réglage suivant la revendication 1, caractérisé en ce qu'entre la tête de la tige (20) et ladite autre aile de la ferrure sont interposés des éléments de la genouillère constitués par des aiguilles (24, 28) disposées dans le corps (25) d'un levier de commande (26) traversé par ladite tige (20), lesdites aiguilles étant interposées entre la tête (22) de la tige (20) et une plaque d'appui (21) contre une aile de ladite ferrure.

6. Dispositif de réglage suivant la revendication 5, caractérisé en ce que ladite tête (22) de la tige (20) et la plaque d'appui (21) comportent respectivement des alvéoles (23, 27) de réception des extrémités des aiguilles (24, 28) correspondantes qui sont montées dans des logements tronconiques (29, 30) ménagés dans le corps (25) du levier de commande (26) en vue de permettre le déplacement angulaire des aiguilles pendant la rotation du levier (26).

7. Dispositif suivant la revendication 1, caractérisé en ce que ladite genouillère est constituée par la tige (33) montée déplaçable angulairement autour desdits moyens de butée (35, 37) et sur la tête (40) de laquelle est articulée une chape (42) formant levier de commande dont les ailes prennent appui par leurs pointes (43) contre l'aile (32) correspondante, par l'intermédiaire d'une plaque (44), ladite tige (33) étant déplaçable entre une position de blocage et une position de déblocage définies par les extrémités (46a, 46b) d'une lumière (40) ménagée dans ladite plaque d'appui.

8. Dispositif de réglage suivant l'une des revendications 1 à 6, caractérisé en ce que les moyens de butée prévus à l'extrémité de ladite tige (7 ; 20, 33) sont constitués par un écrou (11 ; 35) coopérant avec une extrémité filetée de ladite tige, ledit écrou constituant en outre un organe de réglage de l'effort de serrage exercé par la genouillère.

9. Dispositif suivant les revendications 7 et 8 prises ensemble, caractérisé en ce que l'écrou (35) comporte une portée sphérique (36) assurant le déplacement angulaire de ladite tige (33), le boîtier (31) et les ailes (32) de ladite ferrure ayant des lumières (38, 39) permettant les déplacements angulaires de ladite tige (33) entre les positions de blocage et de déblocage de la genouillère.

**Claims**

1. A device for adjusting the position of a steering column of a motor vehicle, comprising a tube (1) supporting the column and connected to a casing (2 ; 31) of rectangular section and mounted to be angularly movable by means of a link (9) attached to the vehicle body between the wings (3 ; 32) of a fixed bracket (4), the device comprising a rod (7 ; 20, 33) which extends through the casing and engages in openings (8 ; 39) in the wings (3 ; 32) of the bracket and is provided at one end with means (11, 11a ; 35, 37) of abutment against one of the wings (3 ; 32) of the bracket, the device being characterized in that it comprises toggle locking means of which the rod (7 ; 20 ; 33) forms part, and the rod has at its opposite end a head (12 ; 22 ; 40) between which and the other of the wings (3) of the bracket (4) at least one element (13, 14 ; 24, 25 ; 42) of the toggle system having a control lever (14 ; 26) is interposed.

2. An adjusting device according to claim 1, characterized in that interposed between the head of the rod (7) and the other wing (3) of the bracket art two elements of the toggle system which are formed by the control lever (14), one end of which bears against the corresponding wing (3) of the bracket (4) via a plate (15) and which cooperates with a pawl (13) of U-section whose wings engage at their ends in recesses (12a) in the head (12) of the rod (7).

3. An adjusting device according to claim 2, characterized in that the pawl (13) comprises a tab (17) forming an abutment for the lever (14) in the locking position of the device.

4. An adjusting device according to claims 2 or 3, characterized in that the lever (14) has an abutment tab (14a) in the unlocking position of the device.

5. An adjusting device according to claim 1, characterized in that interposed between the head of the rod (20) and the other wing of the bracket are toggle system elements formed by pins (24, 28) disposed in the body (25) of a control lever (26) through which the rod (20) extends, the pins being interposed between the head (22) of the rod (20) and a plate (21) bearing against a wing of the bracket.

6. An adjusting device according to claim 5, characterized in that the head (22) of the rod (20) and the bearing plate (21) respectively comprise recesses (23, 27) for receiving the ends of the corresponding pin (24, 28) which are mounted in frustoconical cavities (29, 30) in the body (25) of the control lever (26), so as to enable the pins to be angularly moved during the rotation of the lever (26).

7. An adjusting device according to claim 1, characterized in that toggle system is formed by the rod (33) which is mounted to be angularly movable around the abutment means (35, 37) and pivotably mounted on the head (40) of the rod (33) is a yoke (42) forming the control lever, whose branches bear via their points (43) against the corresponding wing (32) via a plate (44), the rod (33) being movable between a locking position and an unlocking position which are defined by the ends (46a, 46b) of an aperture (40) in the bearing plate.

8. An adjusting device according to any of claims 1 to 6, characterized in that the abutment means provided at the end of the rod (7 ; 20, 23) are formed by a nut (11 ; 35) cooperating with a screwthreaded end portion of the rod, the nut also forming a member for adjusting the clamping force exerted by the toggle system.

9. An adjusting device according to claims 7 and 8, taken together, characterized in that the nut (35) comprises a spherical bearing surface (36) ensuring angular displacement of the rod (33), the casing (31) and the wings (32) on the bracket being formed with apertures (38, 39) allowing angular displacements of the rod (33) between the locking and unlocking positions of the toggle system.

**Patentansprüche**

1. Vorrichtung zum Einstellen der Position einer Kraftfahrzeuglenksäule mit einem einen Träger der Lenksäule bildenden Rohr (1), welches einstückig mit einem Gehäuse (2 ; 31) mit rechteckförmigem Querschnitt ausgebildet ist und zwischen den Schenkeln (3 ; 32) einer festen Armatur (4) mit Hilfe eines Gelenks (9) winkelig verschiebbar ist, das mit der Fahrzeugkarosserie verbunden ist, und einen Bolzen (7 ; 20, 33) aufweist, der das Gehäuse durchquert und in Ausnehmungen (8 ; 39) eingreift, die in den Schenkeln (3 ; 32) der Armatur ausgebildet sind, und der an einem Ende mit einer Anschlageinrichtung (11, 11a ; 35, 37) gegen einen der Schenkel (3 ; 32) der Armatur versehen ist, Vorrichtung dadurch gekennzeichnet, daß sie Kniestück-Sperrmittel aufweist, von denen der Bolzen (7 ; 20, 33) ein Teil ist, und daß letzterer an seinem gegenüberliegenden Ende mit einem Kopf (12 ; 22 ; 40) versehen ist, zwischen dem und dem anderen der Schenkel (3) der Armatur (4) wenigstens ein Kniestückelement (13, 14 ; 24, 25 ; 42) eingefügt ist, welches mit einem Bedienungshebel (14 ; 26) versehen ist.

2. Einstellvorrichtung nach Anspruch 1, dadurch gekennzeichnet, daß zwischen dem Kopf des Bolzens (7) und dem anderen Schenkel (3) der Armatur zwei Elemente des Kniestücks eingefügt sind, die von dem Bedienungshebel (14) gebildet sind, dessen eines Ende gegen den entsprechenden Schenkel (3) der Armatur (4) mittels einer Platte (15) andrückt und mit einer Sperrklinke (13) von U-förmigem Querschnitt zusammenwirkt, dessen Schenkel mit ihren Enden in Ausnehmungen (12a) des Kopfes (12) des Bolzens (7) in Eingriff stehen.

3. Einstellvorrichtung nach Anspruch 2, dadurch gekennzeichnet, daß die Sperrklinke (13) eine Klaue (17) aufweist, die einen Anschlag für den Hebel (14) in Verriegelungsstellung der Vorrichtung bildet.

4. Einstellvorrichtung nach einem der Ansprüche 2 oder 3, dadurch gekennzeichnet, daß der Hebel (14) eine Anschlagklaue (14a) in der Entriegelungsstellung der Vorrichtung aufweist.

5. Einstellvorrichtung nach Anspruch 1, dadurch gekennzeichnet, daß zwischen dem Kopf des Bolzens (20) und dem anderen Schenkel der Armatur aus Nadeln (24, 28) gebildete Kniestückelemente eingefügt sind, die in dem Körper (25) eines Bedienungshebels (26) angeordnet sind, der von dem Bolzen (20) durchquert wird, wobei die Nadeln zwischen dem Kopf (22) des Bolzens (20) und einer Andrückplatte (21) gegen einen Schenkel der Armatur angeordnet sind.

6. Einstellvorrichtung nach Anspruch 5, dadurch gekennzeichnet, daß der Kopf (22) des Bolzens (20) und die Andrückplatte (21) jeweils Aufnahmezellen (23, 27) für die entsprechenden Enden der Nadeln (24, 28) aufweisen, die in kegelstumpfförmigen Lagern (29, 30) angeordnet sind, die in dem Körper (25) des Bedienungshebels (26) ausgebildet sind, um die winkelige Verschiebung der Nadeln während der Drehung des Hebels (26) zu erlauben.

7. Vorrichtung nach Anspruch 1, dadurch gekennzeichnet, daß das Kniestück von dem Bolzen (33) gebildet ist, der winkelig verschiebbar um die Anschlageinrichtungen (35, 37) angeordnet ist, und auf dessen Kopf (40) ein einen Bedienungshebel bildender Gabelbügel (42) gelenkig angeordnet ist, dessen Schenkel durch ihre Spitzen (43) gegen den entsprechenden Schenkel (32) mittels einer Platte (44) andrücken, wobei der Bolzen (33) zwischen einer Verriegelungsstellung und einer Entriegelungsstellung verschiebbar ist, die durch die Enden (46a, 46b) einer Ausnehmung (40) definiert werden, die in der Andrückplatte ausgebildet sind.

8. Einstellvorrichtung nach einem der Ansprüche 1 bis 6, dadurch gekennzeichnet, daß die Anschlageinrichtungen, die an dem Ende des Bolzens (7 ; 20, 33) angeordnet sind, von einer Mutter (11 ; 35) gebildet sind, die mit einem mit Gewinde versehenen Ende des Bolzens zusammenwirkt, wobei die Mutter darüber hinaus ein Verriegelungsorgan der Verriegelungskraft bildet, die durch das Kniestück ausgeübt wird.

9. Vorrichtung nach den zusammengenommenen Ansprüchen 7 und 8, dadurch gekennzeichnet, daß die Mutter (35) eine kugelförmige bzw. sphärische Schutzfläche. (36) aufweist, die die winkelige Verschiebung des Bolzens (33) sicherstellt, wobei das Gehäuse (31) und die Schenkel (32) der Armatur Ausnehmungen (38, 39) aufweisen, die die winkeligen Verschiebungen des Bolzens (33) zwischen einer Verriegelungsstellung und einer Entriegelungsstellung des Kniestücks ermöglichen.

FIG. 1

FIG. 3

FIG. 4

0 202 959

FIG.2

FIG. 5

FIG. 6

FIG. 7

FIG. 8

FIG.9